# EUROPEAN PATENT APPLICATION

(11) **EP 0 743 131 A1**
(43) Date of publication of application: **20.11.1996**
(21) Application number: 96303486.3
(22) Date of filing: 16.05.1996
(51) Int. Cl.: B23K 35/14, C04B 37/02, H01H 33/66

(54) **Ceramic metal bonding**

(30) Priority: 17.05.1995 JP 118705/95; 13.09.1995 JP 235238/95
(71) Applicant: KABUSHIKI KAISHA TOSHIBA, Kawasaki-shi, Kanagawa-ken 210 (JP)
(72) Inventor: Maruyama, Miho, Toshiba Corp., Int. Prop. Division, Tokyo (JP); Suenaga, Seiichi, Toshiba Corp., Int. Prop. Div., Tokyo (JP); Tateishi, Hiroshi, Toshiba Corp., Int. Prop. Div., Tokyo (JP); Nakahashi, Masako, Toshiba Corp., Int. Prop. Div., Tokyo (JP); Takeda, Hiromitsu, Toshiba Corp., Int. Prop. Div., Tokyo (JP); Niwa, Shoji, Toshiba Corp., Int. Prop. Div., Tokyo (JP)
(74) Representative: Shindler, Nigel

(57) **Abstract**

A ceramic-metal bonding material which can be used to form highly reliable sealed parts with good reproducibility by preventing the elements of a seal cover from diffusing into a brazing filler metal in a simple and easy airtight fitting of ceramic and metal for a vacuum airtight container by using the active metal method, a method of manufacturing a ceramic-metal bonded product using the same, and a vacuum airtight container manufactured using the same.

A ceramic-metal bonding material includes a brazing filler metal 1 to be placed on the side of a seal cover 4 made of a metal member, an active metal brazing filler 3 to be placed on the side of an insulating container made of a ceramic member, and an intermediate layer 2 to be placed between the brazing filler metals 1, 3 in order to prevent the constituent elements of the metal member from diffusing; and is suitable as a sealing material for a vacuum airtight container. This vacuum airtight container has openings of the insulating container 5 made of the ceramic member sealed with the seal cover 4 made of the metal member by using the vacuum airtight container sealing material.

## Description

### Background of the Invention

### 1. Field of the Invention

The present invention relates to a ceramic-metal bonding material suitable for manufacturing a vacuum airtight container to be used for vacuum valves, thyristors or the like, a method of manufacturing a ceramic-metal bonded product using the same, and a vacuum airtight container manufactured using the same.

### 2. Description of the Prior Art

A vacuum airtight container for a vacuum interrupter, a vacuum valve, a thyristor or the like generally has a structure in which a seal cover made of a metal member such as stainless steel is airtightly fitted (bonded) to an open end of an insulating container made of a ceramic member or the like while keeping its interior in a vacuum airtight state. And, the Mo-Mn method is conventionally used to seal such a ceramic insulating container with a seal cover. But, the Mo-Mn method has disadvantages that it needs many processes such as metallizing, plating and brazing, the sealing process is complicated, and a thermal treatment at a high temperature is required.

To replace the Mo-Mn method, another sealing method which adopts an active metal method has been proposed (Japanese Patent Disclosure (Kokai) No. 3-354030). This method uses an active metal-containing brazing filler metal (active metal brazing filler), which is prepared by adding an active metal such as Ti or Zr to a brazing filler metal such as an Ag-Cu alloy, in a paste or plate state with an organic binder mixed.

A vacuum furnace used for manufacturing a vacuum airtight container by the above active metal method does not always provide uniform heating within it. Therefore, when many vacuum airtight containers are produced in a single batch, there is a disadvantage that a temperature increase is quick at some parts but slow at some other parts in the furnace. Accordingly, to have a prescribed temperature at any parts in the furnace, it is necessary to make the heat treatment time longer. And, it is inevitable to make the heat treatment time longer because when the vacuum airtight containers are produced, heating is conducted while evacuating the airtight container interior.

When the heat treatment takes a long time, there is a disadvantage that a constituent element such as Ni is eluted from the seal cover made of stainless steel or the like into the brazing filler metal when bonding, and adversely effects on the active metal brazing filler in particular, disabling satisfactory bonding.

As described above, the present process of producing vacuum airtight containers needs a long heat treating time, involving a disadvantage that a constituent element such as Ni is eluted from the seal cover into the brazing filler metal when bonding, and adversely effects on the active metal brazing filler in particular, disabling satisfactory bonding.

But, when degassing heat treatment is effected at a high temperature as described above, the active metal brazing filler in a solid phase state is also subjected to the heat treatment at a high temperature for a long duration, and its constituent elements are excessively reacted, resulting in a disadvantage of adversely effecting on the bonding.

Specifically, the above-described Ag-Cu-Ti brazing filler metal generally produces a Cu-Ti compound by the above solid-phase heat treatment. Since this Cu-Ti compound is stable, it remains in the liquid phase of the brazing filler metal which is melted, and causes adverse effects of deteriorating Ti activity which should intrinsically contribute to the bonding by reacting with a ceramic member and raising the melting point because the brazing filler metal composition is displaced from the eutectic composition. Besides, the presence of the Cu-Ti compound in the brazing filler metal layer after the melt bonding has a tendency of producing voids around it, which become starting points of breakage, thus, causing a disadvantage of adversely effecting on a bonding property.

As described above, in the airtight fitting (bonding) of the ceramic member and the metal member by the conventional active metal method, there was an issue of suppressing an excessive reaction of the constituent elements, which have an adverse effect on the bonding, of the active metal brazing filler.

### Summary of the Invention

The present invention has been completed to remedy the above disadvantages and has as its object to provide a ceramic-metal bonding material which can be used to form highly reliable sealed parts with good reproducibility by preventing the elements of a seal cover from dispersing into a brazing filler metal in a simple and easy airtight fitting of ceramic and metal for a vacuum airtight container by using the active metal method, a method of manufacturing a ceramic-metal bonded product using the same, and a vacuum airtight container manufactured using the same.

The ceramic-metal bonding material according to the present invention is used to bond a seal cover made of a metal member to an insulating container made of a ceramic member, and comprises a brazing filler metal component to be placed on the metal member, an active metal brazing filler component to be placed on the ceramic member, and an intermediate layer which is placed between the brazing filler metal component and the active metal brazing filler component and has a solid phase state remained in order to prevent the constituent elements of the metal member from diffusing.

Particularly, according to the present invention, the intermediate layer of the ceramic-metal bonding material has its part, which is brought into contact with the seal cover with the brazing filler metal component therebetween, formed thicker than its both ends.

The vacuum airtight container according to the present invention is a vacuum airtight container having an insulating container made of a ceramic member and a seal cover made of a metal member to seal openings of the insulating container, wherein the seal cover is bonded to the insulating container by using a ceramic-metal bonding material which is used to bond a seal cover made of a metal member to an insulating container made of a ceramic member, and comprises a brazing filler metal component to be placed on the metal member, an active metal brazing filler component to be placed on the ceramic member, and an intermediate layer which is placed between the brazing filler metal component and the active metal brazing filler component and has a solid phase state remained in order to prevent the constituent elements of the metal member from diffusing.

The vacuum airtight container according to the present invention is sealed by using the ceramic-metal bonding material, wherein the intermediate layer of the ceramic-metal bonding material has its part, which is brought into contact with the seal cover with the brazing filler metal component therebetween, formed thicker than both ends.

And, the present invention has its object to provide a ceramic-metal bonding material which can prevent a reaction adversely effecting on bonding of the constituent elements in an active metal brazing filler even when a solid-phase heat treatment such as a degassing heat treatment is conducted at a high temperature for a long duration, a method of manufacturing a ceramic-metal bonded product which can provide a stable bonded state even when a solid-phase heat treatment such as a degassing heat treatment is conducted at a high temperature for a long duration, and a vacuum airtight container manufactured using the above-mentioned ceramic-metal bonded product.

The ceramic-metal bonding material according to the present invention comprises a laminate of an Ag layer, a Cu layer and an Ag layer overlaid in this order and a Ti-containing layer which is formed on at least one side of the laminate and contains at least a Ti-Ag compound.

Besides, the present invention has its object to provide a method of manufacturing a ceramic-metal bonded product which comprises placing the ceramic bonding material of the present invention between the ceramic member and the metal member so that the Ti-containing layer is in contact with the ceramic member, and heating them in a vacuum at a temperature higher than the melting point of the bonding material to bond the ceramic member and the metal member.

The method of manufacturing a ceramic-metal bonded product according to the present invention can satisfactorily and stably bond the ceramic member and the metal member even when a solid-phase heat treatment is conducted at a high temperature for a long duration before the bonding.

Another method of manufacturing a ceramic-metal bonded product according to the present invention places a bonding material which has an Ag layer, a Cu layer, an Ag layer and a Ti layer in this order placed between a ceramic member and a metal member so that the Ti layer is in contact with the ceramic member, keeps them in a vacuum at a temperature of 673 K or above but below the melting point of the bonding material, and heats up to the melting point or above of the bonding material to bond the ceramic member and the metal member.

Since the ceramic-metal bonding material according to the present invention has the Ag layer which substantially does not change Cu into a solid solution between the Cu layer and the Ti-containing layer, a Cu-Ti compound involved in the heat treatment in a solid solution state can be prevented from being formed, and the formation of a Ti-Ag compound can be promoted. And, differing from the stable Cu-Ti compound, the Ti-Ag compound is so quick to melt into an Ag-Cu brazing filler metal that it melts into a liquid phase with contacting to an Ag-Cu liquid phase to form a liquid phase having a high Ti activity. And, the increase in melting point is substantially nil. Thus, good bonding with the ceramic material can be achieved stably.

Still another method of manufacturing a ceramic-metal bonded product according to the present invention can prevent the formation of a Cu-Ti compound which adversely effects on the bonding in a preheat treatment and attain a sufficient Ti activity because the Ti-Ag compound is produced. Therefore, the ceramic member and the metal member can be bonded stably and satisfactorily.

As described above, the ceramic-metal bonding material according to the invention can suppress the reaction which adversely effects on the bonding of the constituent elements in the active metal brazing filler and provide a good bonded state even when the solid-phase heat treatment is conducted at a high temperature for a long duration. And, the method of manufacturing a ceramic-metal bonded product according to the present invention using such a ceramic bonding material can provide a good bonded state stably even when the solid-phase heat treatment is conducted at a high temperature for a long duration. Besides, the same good bonded state can be obtained stably by another method of manufacturing the ceramic-metal bonded body.

### Brief Description of the Drawings

Fig. 1 is a sectional view for showing one example of the structure of a ceramic-metal bonded product using the ceramic-metal bonding material of the present invention with its placement with respect to a seal cover and a ceramic insulating container.

Fig. 2 is a sectional view for showing another example of the structure of a ceramic-metal bonded product using the ceramic-metal bonding material of the present invention with its placement with respect to a seal cover and a ceramic insulating container.

Fig. 3 is a sectional view for showing still another example of the structure of a ceramic-metal bonded product using the ceramic-metal bonding material of the present invention.

Fig. 4 is a sectional view for showing another example of the structure of a ceramic-metal bonded product using the ceramic-metal bonding material of the present invention.

Fig. 5 is a sectional view for showing another example of the structure of a ceramic-metal bonded product using the ceramic-metal bonding material of the present invention.

Fig. 6 is a sectional view for showing examples of a partial form of the intermediate layer in the ceramic-metal bonded body of the present invention.

Fig. 7 is a sectional view for showing one example of the structure of a ceramic-metal bonded product of the present invention using the intermediate layer shown in Fig. 4 with its placement with respect to a seal cover and a ceramic insulating container.

Fig. 8 is a sectional view for showing another example of the structure of a ceramic-metal bonded product of the present invention using the intermediate layer shown in Fig. 4 with its placement with respect to a seal cover and a ceramic insulating container.

Fig. 9 is a perspective view for showing the appearance of the ceramic-metal bonded body, the seal covers and the ceramic insulating container assembly of the present invention.

Fig. 10 is a sectional view for showing one example of a partial shape of the intermediate layer of the ceramic-metal bonded body of the present invention.

Fig. 11 is a sectional view for showing one example of a partial shape of the intermediate layer of the ceramic-metal bonded body of the present invention.

Fig. 12 is a sectional view for showing a structure of the ceramic-metal bonded body of the present invention.

Fig. 13 is a diagram for schematically showing the observed cross section of a bonded part of the ceramic-metal bonded product of the present invention.

Fig. 14 is a diagram for schematically showing the observed cross section of a bonded part of the ceramic-metal bonded product of Comparative Example 4.

Fig. 15 is a diagram for schematically showing the observed cross section of a sealed part of the vacuum airtight container of Example 6.

Fig. 16 is a diagram for schematically showing the observed cross section of a sealed part of the vacuum airtight container of Comparative Example 5.

### Description of the Preferred Embodiments

The present invention will be described in detail below.

The present invention relates to a ceramic-metal bonding material suitable as a sealing material for a vacuum airtight container, which has made it possible to form highly reliable sealed parts with good reproducibility by preventing the elements of a seal cover from diffusing into a brazing filler metal in a simple and easy sealing of a vacuum airtight container by using the active metal method, a method of manufacturing the same, and a vacuum airtight container using the same.

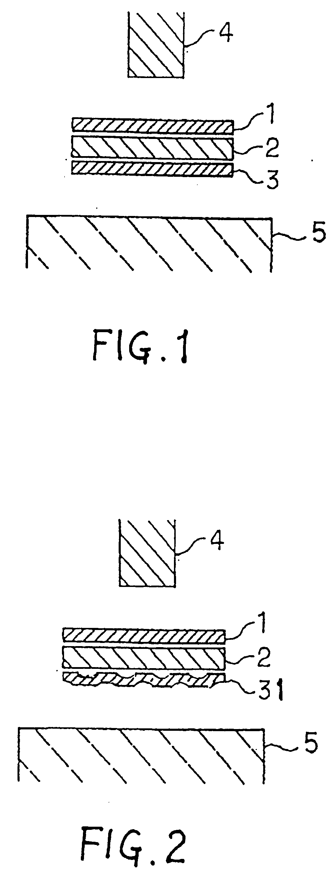

The ceramic-metal bonding material of the present invention comprises three members; a brazing filler metal component, an intermediate layer and an active metal brazing filler component. When it is used as a sealing material for a vacuum airtight container, it is specifically made of a laminate of foils or sheets of a brazing filler metal 1 such as an Ag-Cu brazing filler metal, an intermediate layer 2, and an active metal brazing filler 3 such as an Ag-Cu-Ti brazing filler metal as shown in Fig. 1 for example.

Specifically, a sealing material for a vacuum airtight container, which is used to bond a seal cover 4 made of a metal member to an insulating container 5 made of a ceramic member, comprises a brazing filler metal component to be placed on the metal member, an active metal brazing filler component to be placed on the ceramic member, and an intermediate layer which is placed between the brazing filler metal component and the active metal brazing filler component and prevents the constituent elements of the metal member from diffusing.

Brazing filler metal components suitable for the brazing filler metal 1 include Ag-Cu, Ag-Cu-In, Ag-Cu-Sn, and Ag-Pd. And, active metal brazing filler components suitable for the active metal brazing filler 3 include alloys of the brazing filler metal and an active metal, a laminate of a brazing filler metal and an active metal, and a mixture thereof. Active metals used include Ti, Zr, Hf, Al, Cr, Nb, V and alloys containing them. The brazing filler metal components and the active metal brazing filler components can form a part of the ingredients of the above brazing filler metal and the active metal brazing filler. The active metal is preferably used in an amount of 0.1 to 30% by weight with respect to the brazing filler metal. When the active metal is below 0.1% by weight, sufficient wetting may not be attained for the insulating container made of a ceramic member, and when it exceeds 30% by weight, the melting point may be raised more than necessary. Besides, it is preferable to use the active metal in an amount of 0.5 to 15% by weight in order to suppress a compound phase inconvenient for the bonding from being produced.

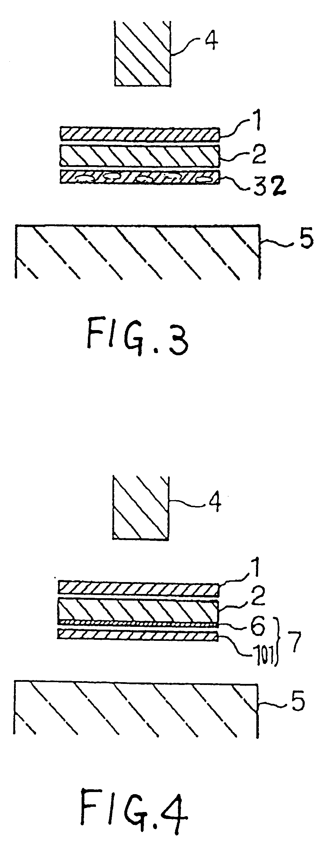

The brazing filler metal 1 and the active metal brazing filler 3 are preferably set to a minimum thickness for bonding, namely about 5 µm to 2 mm. And, in order to promote the keeping of the airtight container interior in a vacuum, it is also effective to have at least either of the brazing filler metal or the active metal brazing filler formed to be a corrugate brazing filler metal 31 as shown in Fig. 2 or a porous brazing filler metal 32 as shown in Fig. 3.

The intermediate layer 2 in the sealing material for the vacuum airtight container of the present invention is a diffusion barrier layer for preventing the constituent elements of the metal member, which forms the seal cover in the heat treatment for bonding, from diffusing into the active brazing filler metal. For example, when a seal cover of stainless steel is used, Ni which is one of the constituent elements of stainless steel has a disadvantage of eluting into the brazing filler metal, but when the intermediate layer is used as a diffusion barrier layer against Ni, Ni can be prevented from eluting into the brazing filler metal.

As the intermediate layer 2, it is preferable to use a solid phase material, such as a metal material of Cu, which delays a diffusion rate of the constituent elements of the metal material in the heat treatment and can prevent the constituent elements of the metal member from reaching the active metal brazing filler.

And, the intermediate layer 2 is required to have a thickness enough to serve as the diffusion barrier layer even when the intermediate layer itself melts into the brazing filler metal during the heat treatment. Specifically, the intermediate layer preferably has a thickness of about 25 µm to 1 mm, though variable depending on the quantity of the brazing filler metal and the duration of heat treatment. When the intermediate layer is thinner than 25 µm, it may be melted into the brazing filler metal when bonding, possibly failing to fully function as the diffusion barrier layer. On the other hand, when it is thicker than 1 mm, it is not desirable because the ceramic member may be broken due to a residual stress.

The intermediate layer 2 may be made of any metal material as far as the above conditions are basically satisfied. But, it is preferable to use a metal having a low expansion coefficient or a low Young's modulus. More specifically, the above Ni diffusion barrier layer preferably use a metal having a low expansion coefficient such as W, Mo, Fe or Ta or a metal having a low Young's modulus such as Ag or Cu. It is particularly preferable to use Ag or Cu as the intermediate layer which is good to match the brazing filler metal when the Ag-Cu brazing filler metal is used as the brazing filler metal.

Besides, the brazing filler metal 1 or the active metal brazing filler 3 may be a laminate of layers having a unit of constituent elements. Otherwise, it can be configured in which as shown in Fig. 4, an active metal film 6 is formed on the main surface of the intermediate layer 2 on the side of the insulating container 5, brazing filler metals 1, 101 are placed on either side of the intermediate layer 2 respectively, and the brazing filler metal 101 and the active metal brazing filler 6 form an active metal brazing filler 7 on the side of the insulating container 4 when making the heat treatment.

And, when Ag or Cu is used as the intermediate layer 2, the intermediate layer 1 may have a structure of (1) a brazing filler metal component = Ag layer, an intermediate layer = Cu layer, and an active metal component = Ag and active metal layers; or (2) a brazing filler metal component = Cu layer, an intermediate layer = Ag layer, and an active metal component = Cu and active metal layers. When structured as described above, a part of the intermediate layer can be used as a brazing filler metal.

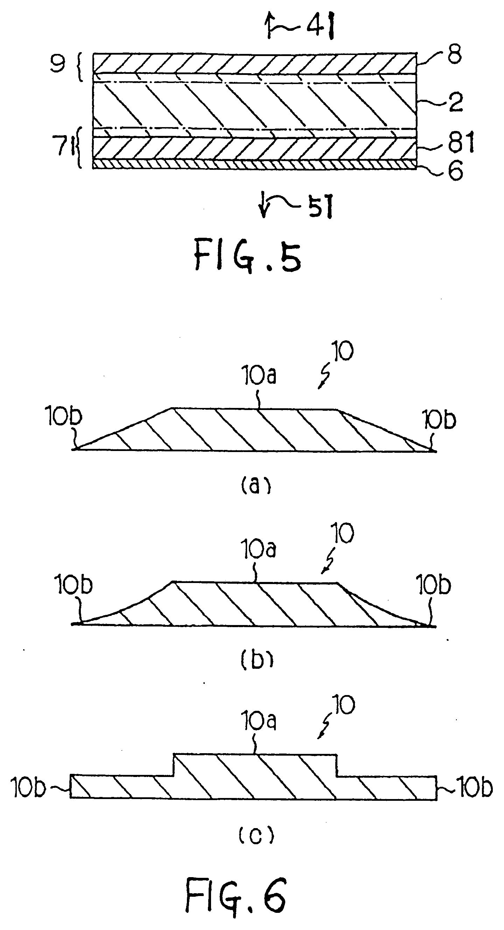

Specifically, as shown in Fig. 5, Ag films 8, 81 are formed as the brazing filler metal component and the active metal brazing filler component on either of the main side of the intermediate layer 2 made of Cu for example, and the active metal film 6 is formed on the Ag film 81 on the side of an insulating container 51. In such a structure, the Ag film 8 on the side of a seal cover 41 and a part of the intermediate layer 2 of Cu form a brazing filler metal 9 during the heat treatment, and the Ag film 81 on the side of the insulating container, the active metal film 6 and a part of the intermediate layer 2 of Cu form an active metal brazing filler 71 during the heat treatment. In this case, the intermediate layer 2 of Cu is determined to have a thickness so that a solid phase part which becomes the diffusion barrier layer remains even when a part of the thickness is used as the brazing filler metal during the heat treatment.

To produce the sealing material described above, various methods can be adopted to make a laminated layer of foils or sheets, or a PVD method such as a plating method or a sputtering method to make a film.

The intermediate layer may have a simple shape of flat sheet. But, a residual stress may be produced due to a difference in thermal expansion between the intermediate layer and the ceramic member depending on the heat treatment conditions and materials, possibly causing adverse effects of cracking or breaking the ceramic insulating container.

Specifically, when the intermediate layer is made thin to eliminate an effect of the residual stress, the intermediate layer is deformed during the heat treatment and melts into the brazing filler metal at parts where the intermediate layer is in contact with the brazing filler metal on the side of the seal cover. As a result, the intermediate layer may not serve as the diffusion barrier layer and the reliability of the sealed part may be lowered. The cause is presumed that the brazing filler metal takes an excessively long time to melt at some area within the furnace when the heat treatment time becomes long.

As shown in Fig. 6, an intermediate layer 10, which has a shape that a part 10a which is contacted with the seal cover with the brazing filler metal therebetween is made thick and both ends 10b are made thin, can prevent partial cracks or breakage of ceramic.
Specifically, various shapes may be formed with both ends 10 of the intermediate layer 10 sloped (including curved slopes) as shown in Fig. 6 (a) and Fig. 6 (b), and formed with both ends 10b of the intermediate layer 10 stepped as shown in Fig. 6 (c).

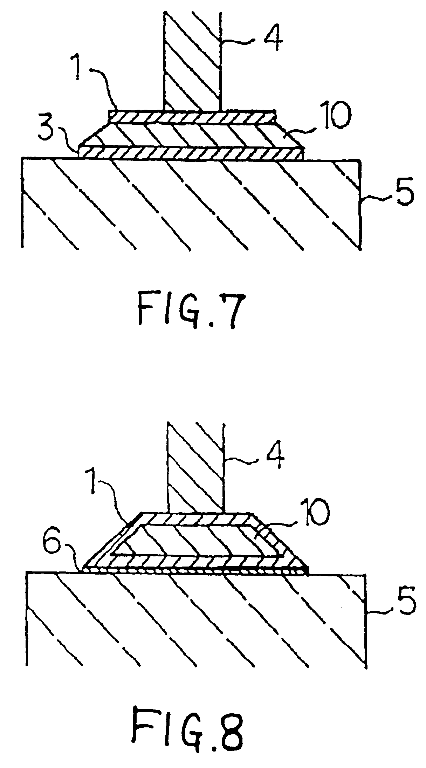

To use the intermediate layers 10 of Fig. 6 (a) to Fig. 6 (c), the brazing filler metal 1 is placed on the intermediate layer 10 on the side of the seal cover 4 and the active metal brazing filler 3 is placed on the intermediate layer 10 on the side of the insulating container 5 as shown in Fig. 7, or the brazing filler metal 1 is formed as a film to cover the intermediate layer 10 and the active metal film 6 is formed on the side of the insulating container 5 as shown in Fig. 8. Thus, various structures can be adopted in the same way as using the intermediate layer having a flat sheet shape.

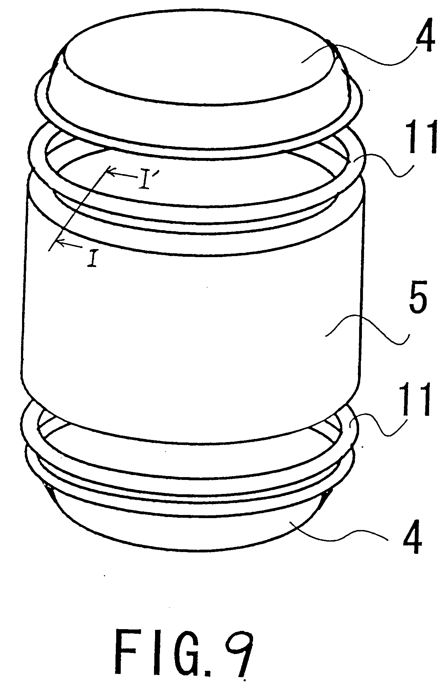

As shown in Fig. 9, the vacuum airtight container of the present invention is formed by sealing (bonding) the ceramic insulating container 5 for structuring a vacuum container in a vacuum and the metal seal covers 4 for sealing the openings of the insulating container 5 by using sealing materials 11 for the above-described vacuum airtight container. The above-described cross sections of specific sealing materials are taken along I-I' in Fig. 9.

The above insulating container 5 is not limited to a particular material but preferably a thermally stable oxide-based ceramic material such as alumina (A1₂0₃), magnesia (M_{g}O) or silica (Si0₂), because it is required to be stable in the production of the vacuum airtight container at a high temperature. And, the seal cover is not limited to a particular material and may use 42-alloy (42Ni-58Fe alloy) copper, or ordinary stainless steel (SUS 304L).

To produce the vacuum airtight container of the present invention, respective parts are positioned as shown in Fig. 9 and the heat treatment is performed to seal while evacuating the interior of the vacuum container which consists of the ceramic insulating container 5 and the seal covers 4 in a vacuum. A degree of vacuum is higher, the better, and preferably higher than the order of 0.01 Pa, so that the vacuum container interior can be fully evacuated. The heat treatment can be performed at a temperature in a range of the melting temperatures or higher of the brazing filler metal and the active metal brazing filler and not higher than a temperature 100 K higher than the above melting temperatures. A retention time is desired to be short as far as the respective brazing filler metals are completely melted, and preferably one minute or more so as to melt the respective brazing filler metals thoroughly and within one hour to prevent the constituent elements of the respective brazing filler metals from being evaporated.

When the vacuum container placed in the furnace is inclined, the molten metal may flow to a lower part and not spread uniformly, but the intermediate layer used serves to hold the molten metal by capillary action when the inclination is a few degrees, allowing good sealing.

The present invention will be described in more detail below by way of its Examples.

### Example 1, Comparative Example 1

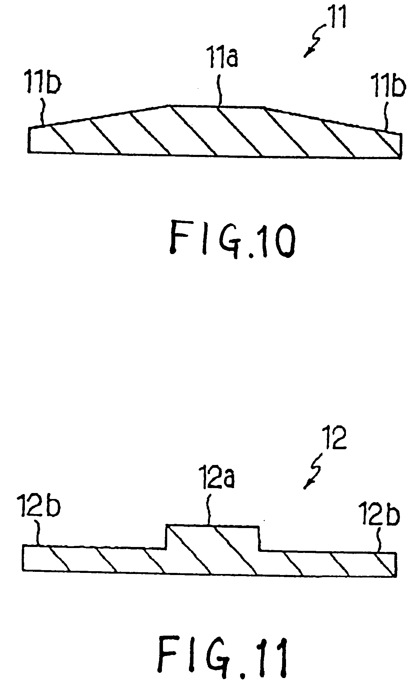

Each ring 11 made of Cu and having an outer diameter of 49 mm, an inner diameter of 41 mm, and a thickness of 0.2 mm was shaped in its cross section to have a part 11a which has a width of 2 mm and a thickness of 2 mm and is contacted to the seal cover 5 with a brazing filler metal therebetween, and to have both sides 11b, 11b each slanted to a thickness of 0.1 mm to a length of 1 mm as shown in Fig. 10.

The Cu ring having the above cross section was used as the intermediate layer, an Ag film having a thickness of about 40 µm was plated on its both sides, and a Ti film having a thickness of about 3 µm was formed on the surface which comes in contact with a ceramic insulating container by a sputtering method to produce a sealing material for a vacuum airtight container.

In the above vacuum airtight container sealing material, the Ag film formed on the surface by metal plating which is brought into contact with the seal cover is a brazing filler metal component, and the Ag film and a part of the Cu ring form a brazing filler metal during the heat treatment. And, the Ti film formed on the surface which comes in contact with the ceramic insulating container and the Ag film are active metal brazing filler components, and the Ti film, the Ag film and a part of the Cu ring form an active brazing filler metal during the heat treatment.

Meanwhile, an alumina cylindrical container having an outer diameter of 50 mm, an inner diameter of 40 mm, and a height of 60 mm was prepared. The above sealing material was disposed on both openings of the alumina cylindrical container to have the Ti film contacted with the container. Besides, a seal cover made of SUS304L was placed on each sealing material.

The alumina cylindrical container having the seal covers was placed in a vacuum furnace, heated up to 1083 K at a heating rate of 10 K/min in a vacuum of 2.7 x 10⁻⁴ Pa, kept at the same temperature to remove the ignition gas (as degassing) in the furnace for 120 minutes, heated up to 1083 K at a heating rate of 10 K/min, and kept at the same temperature for 10 minutes to effect sealing.

The sealed section of the vacuum airtight container thus produced was examined to find that the Cu ring had a Cu solid phase part having a thickness of about 0.1 mm as the intermediate layer. This thickness was sufficient to function as the diffusion barrier layer for Ni eluted from SUS304L which was a constituent material for the seal cover during the heat treatment for sealing. And, the sealed section had a good flow of the brazing filler metal to form a sufficient leg length (a sufficient wetting), and no leak was observed. Besides, the seal cover subjected to a tension test had a sufficient strength of 1000 kgf.

In Comparative Example 1, seal covers of SUS304L were used to seal an alumina cylindrical container under the same conditions as in Example 1 except that a sealing material consisting of a 72% Ag-Cu alloy foil having a thickness of 100 µm and a Ti foil having a thickness of 6 µm was used. The sealed section of the vacuum airtight container thus produced was examined to find that bonding by the active metal brazing filler was incomplete because Ni was eluted from SUS304L which was a constituent material for the seal cover into the active brazing filler metal, and leak was observed clearly. And, it could not be subjected to the tension test. And, the active metal brazing filler did not flow toward the alumina cylindrical container, and only the seal covers were wet.

### Example 2, Comparative Example 2

Each ring 12 made of Cu and having an outer diameter of 49 mm, an inner diameter of 41 mm, and a thickness of 0.2 mm was shaped in its cross section to have a protruded part 12a which has a width of 2 mm and a height of 0.15mm and is contacted to the seal cover with a brazing filler metal therebetween, and to have its both sides 12b, 12b each shaped to a thickness of 0.1 mm as shown in Fig. 11.

Using the Cu ring having the above cross section as the intermediate layer, an Ag-Cu brazing filler metal having a thickness of 200 µm was placed on the protruded part on the side of the seal cover, and an Ag-Cu-Ti brazing filler metal containing 1.5% by weight of Ti and having a thickness of 50 µm was placed to prepare a sealing material for a vacuum airtight container.

Meanwhile, an alumina cylindrical container having an outer diameter of 50 mm, an inner diameter of 40 mm, and a height of 60 mm was prepared. The above sealing material was disposed on both openings of the alumina cylindrical container with the protruded part opposed to the seal cover, and a seal cover made of 42-alloy was placed on it.

The alumina cylindrical container having the seal covers was placed in a vacuum furnace, heated up to 1043 K at a heating rate of 15 K/min in a vacuum of 2.7 x 10⁻⁴ Pa, kept at the same temperature to remove the ignition in the furnace for 60 minutes, heated up to 1083 K at a heating rate of 15 K/min, and kept at the same temperature for 10 minutes to effect sealing.

The sealed section of the vacuum airtight container thus produced was examined to find that the intermediate layer made of the Cu ring was not thoroughly melted, and sufficient to function as the diffusion barrier layer for Ni eluted from the 42-alloy which was a constituent material for the seal cover during the heat treatment for sealing. And, the sealed section had a good flow of the brazing filler metal to form a sufficient leg length, and no leak was observed. Besides, the seal cover subjected to a tension heat had a sufficient strength at 1000 kgf.

In Comparative Example 2, seal covers of the 42-alloy were used to seal an alumina cylindrical container under the same conditions as in Example 2 except that a sealing material consisting of a 72% Ag-Cu alloy foil having a thickness of 100 µm and a Ti foil having a thickness of 6 µm was used.

The sealed section of the vacuum airtight container thus produced was examined to find that bonding by the active metal brazing filler was incomplete because Ni was eluted from the 42-alloy which was a constituent material for the seal cover into the active metal brazing filler, and leak was observed clearly. And, it could not be subjected to the tension test. And, the active metal brazing filler did not flow toward the alumina cylindrical container, and only the seal covers were wet.

### Example 3, Comparative Example 3

A ring of Cu having an outer diameter 89 mm, an inner diameter 85 mm, and a thickness of 0.2 mm was shaped to have a cross section as shown in Fig. 10 by the same way as in Example 1. Using this Cu ring as the intermediate layer, an Ag film having a thickness of about 40 µm was formed on its both sides by a plating method, and a Ti film having a thickness of about 3 µm was formed on the surface which is contacted to a ceramic insulating container by a metallizing method to produce a sealing material for a vacuum airtight container.

In the above vacuum airtight container sealing material, the surface which is in contact with the seal cover becomes a brazing filler metal during the heat treatment in the same way as in Example 1, and the surface which is in contact with the ceramic insulating container becomes a brazing filler metal during the heat treatment.

Meanwhile, an alumina cylindrical container having an outer diameter of 90 mm, an inner diameter of 84 mm, and a height of 180 mm was prepared. The above sealing material was disposed on both openings of the alumina cylindrical container to have the Ti film contacted with the container. Besides, a seal cover made of 42-alloy was placed on each sealing material.

The alumina cylindrical container having the seal covers was placed in a vacuum furnace, heated up to 1013 K at a heating rate of 10 K/min in a vacuum of 2.7 x 10⁻⁴ Pa, kept at the same temperature to remove the ignition in the furnace for 120 minutes, heated up to 1093 K at a heating rate of 10 K/min, and kept at the same temperature for 20 minutes to effect sealing.

The sealed section of the vacuum airtight container thus produced was examined for its cross section to find that the Cu ring had a Cu solid phase part having a thickness of about 0.1 mm as the intermediate layer. This thickness was confirmed to be sufficient to function as the diffusion barrier layer for Ni eluted from the 42-alloy which was a constituent material for the seal cover during the heat treatment for sealing. And, the sealed section had a good flow of the brazing filler metal to form a sufficient leg length, and no leak was observed. Besides, the seal cover subjected to a tension test had a sufficient strength of 1000 kgf.

In Comparative Example 3, seal covers of the 42-alloy were used to seal an alumina cylindrical container under the same conditions as in Example 3 except that a sealing material used had an Ag-Cu brazing filler metal having a thickness of 0.05 mm, a flat Cu ring having a thickness of 0.2 mm, a Ti foil having a thickness of 3 µm, and an Ag-Cu brazing filler metal having a thickness of 0.05 mm laminated in this order from the seal cover. The sealed section of the vacuum airtight container thus produced was examined for its cross section to find that parts of the Cu ring which were in contact with the brazing filler metal had an average thickness of about 0.1 mm because of elution into the brazing filler metal, and those of the Cu ring which were not in contact had a thickness of about 0.2 mm. The seal cover subjected to a tension test had a low strength of 700 kgf as compared with the vacuum airtight container of Example 3.

As described above, the vacuum airtight container sealing material of the present invention can prevent the elements of the seal cover from diffusing into the active metal brazing filler by means of the intermediate layer, so that it is possible to form highly reliable sealed parts with good reproducibility. And, the vacuum airtight container of the present invention using the above vacuum airtight container sealing material can provide the sealed parts with a high bonding strength and good reliability.

As other Examples of the present invention, there will be described a method of manufacturing a ceramic-metal bonded product which can prevent a reaction adversely effecting on bonding of the constituent elements in an active metal brazing filler and stably provide a good bonded state even when a solid-phase heat treatment such as a degassing heat treatment is conducted at a high temperature for a long duration.

The ceramic-metal bonding material of the present invention comprises a laminate of an Ag layer, a Cu layer and an Ag layer and a Ti-containing layer which is formed on at least one side of the laminate and contains at least a Ti-Ag compound.

Since the ceramic-metal bonding material according to the present invention has the Ag layer which substantially does not change Cu into a solid solution between the Cu layer and the Ti-containing layer, a Cu-Ti compound involved in the heat treatment in a solid solution state can be prevented from being formed, and the formation of a Ti-Ag compound can be promoted. And, differing from the stable Cu-Ti compound, the Ti-Ag compound is so quick to melt into an Ag-Cu brazing filler metal that it melts into a liquid phase upon contacting with an Ag-Cu liquid phase to form a liquid phase having a high Ti activity. And, the increase in melting point is substantially nil. Thus, good bonding with the ceramic material can be achieved stably.

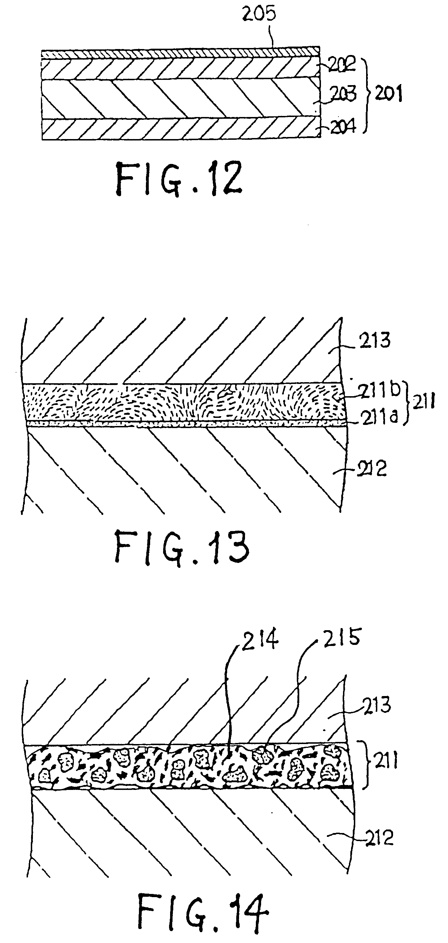

Fig. 12 is a sectional view for showing a structure of the ceramic-metal bonding material according to one embodiment of the present invention. In the drawing, reference numeral 201 designates a laminate consisting of an Ag layer 202, a Cu layer 203, and an Ag layer 204 laminated in this order, and a Ti-containing layer 205 which contains a Ti-Ag compound is formed on at least one side of the laminate 201.

In the ceramic-metal bonding material having the structure as described above, since the Ag layer 204 is formed which substantially does not change Cu into a solid solution between the Cu layer 203 and the Ti-containing layer 205, a Cu-Ti compound involved in the heat treatment in a solid solution state can be prevented from being formed, and the formation of a Ti-Ag compound can be promoted. And, by providing an active metal Ti not as a pure Ti but as a Ti compound, Ti before bonding can be suppressed from being oxidized, and the Ti activity contributing to bonding can be attained stably.

And, differing from the stable Cu-Ti compound, the Ti-Ag compound is quick to melt into the Ag-Cu brazing filler metal, and quickly melts into the liquid phase upon contacting with the Ag-Cu liquid phase, forming a brazing filler metal liquid phase having a high Ti activity. And, the melting point is substantially not recognized to increase. Therefore, good bonding with the ceramic member can be achieved stably, and a brazing filler metal layer (bonding layer) which is dense and excelling in a bonding property and an airtight property can be obtained. On the other hand, since the Cu-Ti compound has a slow melting rate into the Ag-Cu liquid phase, it is stable in the form of a solid phase for a long duration, becoming a cause of forming a brazing filler metal liquid phase having a low Ti activity. And, it is also confirmed to raise the melting point.

The Ti-containing layer 205 is satisfactory when it contains at least a Ti-Ag compound and consists of for example a single layer of a Ti-Ag compound or a Ti layer containing a Ti-Ag compound. And, the Ti-Ag compound in the Ti-containing layer 205 is preferably contained in 10% by weight or more, and more preferably 60% by weight or more. When the Ti-Ag compound in the Ti-containing layer 205 is less than 10% by weight, the above-described effects may not be attained fully. It is preferable that the Ti composition as the entire bonding material is about 0.1 to 30% by weight with respect to the Ag-Cu brazing filler metal. When the Ti composition is less than 0.1% by weight, sufficient wettability to the ceramic member may not be attained, and when it exceeds 30% by weight, the melting point may be raised more than necessary. Besides, the Ti composition is preferably 0.5 to 15% by weight to suppress a compound phase not suitable for bonding from being produced.

As to a ratio of Ag and Cu (a ratio of the Ag layer 202 and the Cu layer 203, and of the Ag layer 204 and the Cu layer 203), a eutectic composition may be used. But, when used for bonding with a metal member containing Ti such as 42-alloy, diffusion of Ni into the brazing filler metal may have an adverse effect on a bonding property. Therefore, it is preferable that the composition is made to have Cu which is contained in the bonding material remained without melting and to function the unmelted Cu intermediate layer as the diffusion barrier. Specifically, a thickness ratio (weight ratio) of Ag:Cu is preferably about 1:0.7 to 10, so that part of the Cu layer 203 retains a solid phase in the brazing filler metal.

The ceramic-metal bonding material of the present invention is effective to bond (seal) the ceramic member and the metal member in manufacturing a vacuum airtight container such as a vacuum valve and a thyristor. But, it can also be used to bond ceramic members mutually by forming the Ti-containing layer 20 on both sides of the laminate 201.

The ceramic-metal bonding material described above can be manufactured as follows. First, the Ag layers 202, 204 are formed on either surface of the Cu layer 203 respectively by cladding or plating to form the laminate 201. A ratio of Ag to Cu is as described above.

Then, the Ti-containing layer 205 containing the Ti-Ag compound is formed in contact with the Ag layer 202 or 204 on at least one surface of the laminate 201. To form the Ti-containing layer 205, the Ti-Ag compound such as TiAg or Ti₃ Ag is directly cladded, or the Ti-Ag compound layer may be formed by a PVD method such as a sputtering method.

And, the Ti-containing layer 205 containing a Ti-Ag compound such as TiA or Ti₃ Ag can be formed by forming the Ti layer on at least either of the Ag layer 202 or 204 on the laminate 201 and heating. In this case, it is preferable to form the Ti layer by the PVD method such as a metallizing method or a plating method to promote the reaction between Ti and Ag. To form the Ti-Ag compound by the heat treatment, the formation of the compound by the heat treatment can be promoted by combining Ag (200) orientation and Ti (002) orientation though not particularly limited to the relation between the crystal orientations of both layers.

The heat treatment for forming the above Ti-Ag compound is preferably performed in a vacuum higher than the order of 0.1 Pa at temperatures of 673 to 973 K to prevent Ti from being oxidized. When the heat treatment temperature is less than 673 K, the Ti-Ag compound may not be formed satisfactorily, and when it exceeds 973 K, a compound phase which is inconvenient for bonding may be produced in addition to the Ti-Ag compound.

The method of manufacturing a ceramic-metal bonded product uses the above-described ceramic-metal bonding material of the present invention to bond (seal) a ceramic member and a metal member.

Specifically, the above-described ceramic-metal bonding material of the present invention is placed between a ceramic member and a metal member so that the Ti-containing layer 205 comes in contact with the ceramic member. In this state, they are heated in a vacuum to bond (seal) the ceramic member and the metal member.

The ceramic member and the metal member which are members to be bonded are not particularly specified, but they are suitable for bonding (sealing) of a metal end plate and a ceramic container which are constituent members for a vacuum airtight container such as a vacuum valve which is required to be heated at a high temperature for a long duration (degassing heat treatment).

A degree of vacuum at the heat treatment is preferably higher than 0.1 Pa. And, the heat treatment temperature is desirably the melting temperature or higher of the Ag-Cu brazing filler metal and not higher than a temperature 100 K higher than the above melting temperature. The Ti-Ag compound is easy to melt into the Ag-Cu brazing filler metal and does not raise the melting point unlike the Cu-Ti compound. Therefore, it can be satisfactorily bonded under the heat treatment condition that the ordinary Ag-Cu brazing filler metal melts. The retention time is preferably short under a condition that the brazing filler metal melts. Specifically, the retention time is preferably one minute or more to completely melt the brazing filler metal but one hour or less to prevent the constituent elements of the brazing filler metal from being evaporated.

When the heat treatment is performed by using the ceramic-metal bonding material of the present invention under the above-described conditions, the production of a Cu-Ti compound which has an adverse effect on bonding can be prevented and a sufficient Ti activity can be attained by the Ti-Ag compound even when the heat treatment is performed at a high temperature for a long duration, such as a degassing heat treatment before bonding (sealing), so that the ceramic member and the metal member can be bonded stably and satisfactorily. And, a good bonded body (sealed body) can be attained because a brazing filler metal layer which is a fine eutectic mixture composition and excelling in a bonding property and an airtight property can be obtained by the heat treatment for bonding.

The method of manufacturing another ceramic-metal bonded body of the present invention will be described. First, a bonding material having an Ag layer, a Cu layer, an Ag layer and a Ti layer laminated in this order is placed between a ceramic member and a metal member so that the Ti layer comes in contact with the ceramic member. This bonding material is in the same state before the heat treatment for making the Ti-Ag compound in the production process of the above-described bonding material of the present invention. Specifically, the manufacturing method, the Ti composition and the Ag-Cu composition are as described above.

The ceramic member and the metal member are bonded by performing the heat treatment in a vacuum under the above conditions, but before the heat treatment for bonding, namely before melting the brazing filler metal, they are once kept at a temperature of 673 K or above but less than the melting temperature of the bonding material (preheat treatment). This preheat treatment suppresses the formation of the Cu-Ti compound, and the Ti-Ag compound is produced. When the preheat treatment temperature is less than 673 K, the Ti-Ag compound may not be produced satisfactorily. Specifically, the upper limit of the preheat treatment temperature is preferably 1050 K.

This preheat treatment can be performed together with the degassing heat treatment in the production of the vacuum airtight container. And, the preheat treatment is determined to be performed for about 30 minutes to five hours to produce the Ti-Ag compound, but when it is performed together with the degassing heat treatment, this duration may conform with the conditions of the degassing heat treatment.

Then, the temperature is raised to the melting temperature or more of the Ag-Cu brazing filler metal but not higher than a temperature 100 K higher than the above melting temperature to melt the brazing filler metal so that the ceramic member and the metal member are bonded. It is preferable that the vacuum condition for the preheat treatment and the condition for the bonding heat treatment are the same as in the above-described manufacturing method.

According to this method of manufacturing the ceramic-metal bonded body, even when the solid phase heat treatment at a high temperature for a long duration, such as the degassing heat treatment, is performed before bonding (sealing), this treatment is equivalent to the preheat treatment and prevents the formation of the Cu-Ti compound which has an adverse effect on bonding, and the Ti-Ag compound is produced. And, since a satisfactory Ti activity is attained by virtue of this Ti-Ag compound, the ceramic member and the metal member can be bonded stably and satisfactorily. And, a good bonded body (sealed body) can be attained because a brazing filler metal layer which is dense and excelling in a bonding property and an airtight property can be obtained by the heat treatment for bonding.

When the members to be bonded are placed in a furnace and have an inclined interface, the molten metal may flow to a lower part and become not uniform. Particularly, when the metal member has an area which is smaller than the bonding surface of the ceramic member, the brazing filler metal may not flow thoroughly. In such a case, in any of the above-described manufacturing methods, part of the Cu layer in the bonding material may be existed as a solid phase during the bonding as the intermediate layer having an area substantially same as the bonded surface, and good sealing can be made with all surfaces uniformly bonded without any defect because the brazing filler metal liquid phase is held between the Cu layer and the ceramic member.

### Example 4, Comparative Example 4

An Ag layer was plated to a thickness of about 40 µm on either surface of a Cu sheet which has a thickness of 0.2 mm, and a Ti layer was vacuum plated to a thickness of 3 µm onto one of the Ag layers to form a bonding material. Meanwhile, an alumina member having a diameter of 30 mm and a thickness of 5 mm and an SUS304 member having the same size were prepared as members to be bonded. The bonding material was placed between the alumina member and the SUS304 member so that the Ti layer is in contact with the alumina member. And, they were heated up to 1013 K at a heating rate of 10 K/min in a vacuum of 2.5 x 10⁻⁴ Pa, kept at the same temperature for two hours to produce a Ti-Ag compound. Subsequently, heating was made up to 1058 K at a heating rate of 10 K/min, and this temperature was kept for five minutes to bond the alumina member and the SUS304 member.

To compare with Example 4, Comparative Example 4 was conducted in which a flat Ti-Ag-Cu alloy brazing filler metal having a thickness of 200 µm was used as a bonding material and placed between an alumina member and an SUS304 member each having the same size, and they were heated under the same conditions as in Example 4 to bond the alumina member and the SUS304 member.

The ceramic-metal bonded products produced in Example 4 and Comparative Example 4 were examined for their conditions. It was found that the bonded product of Example 4 was appropriately bonded. As shown in Fig. 13 which schematically shows a cross section of the bonded part examined, a Ti segregation layer 211a was formed in a bonding layer 211 to face an alumina member 212, and the brazing filler metal layer 212 itself had a fine eutectic texture. In the drawing, reference numeral 213 designates the SUS304 member.

On the other hand, in the bonded body according to Comparative Example 4, the brazing filler metal did not melt completely and the SUS 304 member was easily separated at the bonded portion. As shown in Fig. 14 which schematically shows a cross section of the bonded part examined by SEM (Scanning Electron Microscope), a bonding layer 211 was found to have a Cu-Ti compound 214. A brazing filler metal 215 itself had a coarse two phase structure and had few Ti segregation layer formed.

### Example 5

A bonding material produced in the same way as in Example 4 was previously heated at 973 K for two hours in a vacuum of 2.5 x 10⁻⁴ Pa. It was found, when the heat treated bonding material was examined, that the Ti layer produced a Ti-Ag compound.

The bonding material having the Ti layer containing the Ti-Ag compound was placed between an alumina member and an SUS304 member each having the same size as in Example 4 so that the Ti layer containing the Ti-Ag compound was in contact with the alumina member, and they were heated up to 1058 K at a heating rate of 10 K/min in a vacuum of 2.5 x 10⁻⁴ Pa, and kept at the same temperature for five minutes to bond the alumina member and the SUS304 member.

The bonded body thus produced was examined for its conditions and found that the bonding was good in the same way as in Example 4. And, the bonded section had the same texture as that in Example 4.

### Example 6

An Ag layer was plated to a thickness of about 40 µm on either surface of a Cu ring having an outer diameter of 49 mm, an inner diameter of 41 mm, and a thickness of 0.2 mm, and a Ti layer was vacuum plated to a thickness of 3 µm onto one of the Ag layers to form a bonding material.

And, an alumina cylindrical container having an outer diameter of 50 mm, an inner diameter of 40 mm, and a height of 60 mm was prepared. The above bonding material was disposed on both bonding surfaces of the alumina cylindrical container to have the Ti layer contacted with the alumina cylindrical container. Then, an edge sealing type end plate made of SUS304L was placed on each bonding material. They were heated up to 973 K at a heating rate of 10 K/min in a vacuum of 2.5 x 10⁻⁴ Pa, and kept at the same temperature for two hours to simultaneously effect the formation of a Ti-Ag compound and the bakeout of the container interior. Subsequently, the temperature was raised up to 1060K at a heating rate of 10 K/min, and held at this temperature for 5 minutes to produce a vacuum airtight container.

### Comparative Example 5

To compare with Example 6, Comparative Example 5 was conducted in which the procedure of Example 6 was repeated to produce a vacuum airtight container except that a Ti-Ag-Cu alloy brazing filler metal having an outer diameter of 49 mm, an inner diameter of 41 mm, and a thickness of 0.2 mm was used.

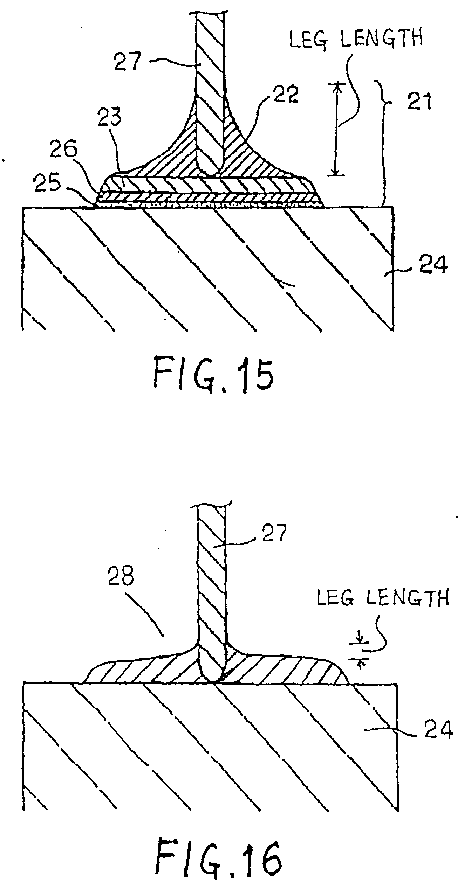

The vacuum airtight containers produced in Example 6 and Comparative Example 5 were examined. It was found that the vacuum airtight container of Example 6 has a sealed section 21 with a good flow of a brazing filler metal 22 to form a sufficient leg length as schematically shown in Fig. 15. In the drawing, reference numeral 23 designates a Cu intermediate layer having kept a solid phase state as the diffusion barrier, and a Ti segregation layer 25 was formed on an alumina container 24 between the Cu intermediate layer 23 and the alumina container 24, and a brazing filler metal 26 itself had a fine eutectic texture. In the drawing, reference numeral 27 is an edge sealing type end plate made of SUS304L. And, the vacuum airtight container of Example 6 was not found any leak, and had a strength of 1000 kgf when subjected to a tension test.

In the case of the vacuum airtight container of Comparative Example 5, it was found that a brazing filler metal 28 did not melt completely, it had a matte surface, and some areas did not have a leg length as schematically shown in Fig. 16. The brazing filler metal 28 was examined for its texture in cross section and found substantially no fine eutectic texture, a coarse texture containing a Cu-Ti compound, and no Ti segregation layer. And, in the vacuum airtight container of Comparative Example 2, leak was obviously found, and the tension test resulted in separation from the bonded portion at a load of 300 kgf.

### Example 7, Comparative Example 6

An Ag layer was plated to a thickness of about 30 µm onto either side of a ring of Cu having an outer diameter of 49 mm, an inner diameter of 41 mm, and a thickness of 0.15 mm, and a TiAg compound layer was sputtered to a thickness of 5 µm onto one of the Ag layers to make a bonding material.

Then, the above bonding material was placed on the bonding surface at either end of an alumina cylindrical container having an outer diameter of 50 mm, an inner diameter of 40 mm, and a height of 60 mm to have the TiAg compound layer contacted with the alumina cylindrical container, and a seal cover of SUS304L was placed on each bonding material. This assembly was heated up to 1103 K at a heating rate of 10 K/min in a vacuum of 2.5 x 10⁻⁴ Pa, and held at this temperature for 20 minutes to seal the alumina cylindrical container and the SUS304L seal covers.

To compare with Example 7, Comparative Example 6 was conducted in which an Ag layer was plated to a thickness of about 30 µm onto either end of a Cu ring having an outer diameter of 49 mm, an inner diameter of 41 mm, and a thickness of 0.2 mm, and a Ti layer was sputtered to a thickness of 3 µm onto one of the Ag layers to produce a bonding material. And, in the same way as in Example 7, the bonding material was placed between an alumina cylindrical container and a seal cover of SUS304L, directly heated up to 1103 K at a heating rate of 10 K/min without performing the heat treatment for producing a Ti-Ag compound, kept at the heated temperature for 20 minutes to seal the alumina cylindrical container and the seal cover of SUS304L.

The sealed sections were compared between Example 7 and Comparative Example 6 to find that the sealed section in Example 7 had the same surface as the ordinary Ag-Cu brazing filler metal, but the sealed section in Comparative Example 6 had its surface partly formed of a black film of Ti oxide.

As described above, the ceramic bonding material of the present invention can prevent a reaction which has an adverse effect on bonding of the constituent elements in the active brazing filler metal and a good bonded condition can be achieved even when the solid phase heat treatment is performed at a high temperature for a long duration. And, the method of manufacturing a ceramic-metal bonded body using the above ceramic-metal bonding material can provide a good bonded state stably even in the solid phase heat treatment at a high temperature for a long duration. And, another method of manufacturing a ceramic-metal bonded product can also provide the same good bonded state stably.

## Claims

1. A ceramic-metal bonding material to be used for bonding a metal member to a ceramic member comprising a brazing filler metal layer placed on the side of said metal member, an active metal brazing filler layer placed on the side of said ceramic member, and an intermediate layer which is placed between said brazing filler metal layer and said active metal brazing filler layer and contains a solid phase state of said metal member component to prevent the constituent elements of said metal member layer from dispersing.

2. A ceramic-metal bonding material according to Claim 1, wherein said brazing filler metal layer contains one member selected from a group of components Ag-Cu, Ag-Cu-In, Ag-Cu-Sn, and Ag-Pd.

3. A ceramic-metal bonding material according to Claim 2, wherein said brazing filler metal layer has a thickness of 5 µm to 2 mm.

4. A ceramic-metal bonding material according to Claim 1, wherein said active metal brazing filler layer contains one member selected from a group of components Ti, Zr, Hf, Al, Cr, Nb, and V.

5. A ceramic-metal bonding material according to Claim 4, wherein said active metal brazing filler layer has its component mixed in 0.1 to 30% by weight with respect to the component of the brazing filler metal layer.

6. A ceramic-metal bonding material according to Claim 5, wherein said active metal brazing filler layer has its component mixed in 0.1 to 15% by weight with respect to the component of the brazing filler metal layer.

7. A ceramic-metal bonding material according to Claim 4, wherein said active metal brazing filler layer has a thickness of 5 µm to 2 mm.

8. A ceramic-metal bonding material according to Claim 1, wherein said intermediate layer contains one member selected from a group of components W, Mo, Fe, Ta, Ag, and Cu.

9. A ceramic-metal bonding material according to Claim 8, wherein said intermediate layer has a thickness of 25 µm to 1 mm.

10. A ceramic-metal bonding material according to Claim 1, wherein said brazing filler metal layer and said intermediate layer have a thickness ratio of 1:0.7 to 10.

11. A ceramic-metal bonding material according to Claim 10, wherein said brazing filler metal layer is Ag, and said intermediate layer is Cu.

12. A ceramic-metal bonding material according to Claim 1, wherein said brazing filler metal layer is Ag-Cu, and said intermediate layer is Ag or Cu.

13. A ceramic-metal bonding material according to Claim 1, wherein said brazing filler metal layer or said active metal brazing filler layer is a corrugate brazing filler metal.

14. A ceramic-metal bonding material according to Claim 1, wherein said brazing filler metal layer or said active brazing filler metal layer is a porous brazing filler metal.

15. A ceramic-metal bonding material to be used for bonding a metal member to a ceramic member comprising a brazing filler metal layer placed on the side of said metal member, an active metal brazing filler layer placed on the side of said ceramic member, and an intermediate layer which is placed between said brazing filler metal layer and said active metal brazing filler layer and contains a solid phase state of said metal member component to prevent the constituent elements of said metal member layer from diffusing; said intermediate layer having a shape that its part, which is in contact with said seal cover with said brazing filler metal layer therebetween, is thicker than its both ends.

16. A ceramic-metal bonding material according to Claim 15, wherein said intermediate layer has its both ends tapered.

17. A ceramic-metal bonding material according to Claim 15, wherein said intermediate layer has its both ends stepped.

18. A ceramic-metal bonding material according to Claim 15, wherein said intermediate layer has its entire surface covered with a brazing filler metal layer.

19. A ceramic-metal bonding material comprising a laminate of an Ag layer, a Cu layer and an Ag layer overlaid in this order and a Ti-containing layer which is formed on at least one side of said laminate and contains at least a Ti-Ag compound.

20. A ceramic-metal bonding material according to Claim 19 further comprising a Ti-containing layer which contains a Ti-Ag compound and consists of the Ag layer having Ag (200) orientation and the Ag layer having Ti (002) orientation.

21. A ceramic-metal bonding material according to Claim 19, wherein said Ag layer has a thickness of 5 µm to 2 mm.

22. A ceramic-metal bonding material according to Claim 21, wherein the Ti-Ag layer has a thickness of 5 µm to 2 mm.

23. A ceramic-metal bonding material according to Claim 19, wherein the Ti component of the Ti-containing layer is contained in 0.1 to 30% by weight with respect to the Ag-Cu brazing filler metal component consisting of the Ag layer and the Cu layer.

24. A ceramic-metal bonding material according to Claim 23, wherein the Ti component is contained in 0.1 to 15% by weight with respect to the Ag-Cu brazing filler metal.

25. A ceramic-metal bonding material according to Claim 19, wherein the Cu layer has a thickness of 25 µm to 1 mm.

26. A ceramic-metal bonding material according to Claim 19, wherein said Ag layer and said Cu layer have a thickness ratio of 1:0.7 to 10.

27. A ceramic-metal bonding material according to Claim 19, wherein the Ti-Ag compound in the Ti-containing layer is 10% by weight or more.

28. A ceramic-metal bonding material according to Claim 27, wherein the Ti-Ag compound in the Ti-containing layer is 60% by weight or more.

29. A vacuum airtight container having an insulating container made of a ceramic member and a seal cover made of a metal member to seal openings of said insulating container, wherein said insulating container and said seal cover are sealed with a ceramic-metal bonding material which comprises a brazing filler metal layer placed on the side of said metal member, an active metal brazing filler layer placed on the side of said ceramic member, and an intermediate layer which is placed between said brazing filler metal layer and said active metal brazing filler layer and contains a solid phase state of said metal member component to prevent the constituent elements of said metal member layer from diffusing.

30. A vacuum airtight container having an insulating container made of a ceramic member and a seal cover made of a metal member to seal openings of said insulating container, wherein said insulating container and said seal cover are sealed with a ceramic-metal bonding material which comprises a brazing filler metal layer placed on the side of said metal member, an active brazing filler metal layer placed on the side of said ceramic member, and an intermediate layer which is placed between said brazing filler metal layer and said active brazing filler metal and contains a solid phase state of said metal member component to prevent the constituent elements of said metal member layer from dispersing; said intermediate layer having a shape that its part, which is in contact with said seal cover with said brazing filler metal layer therebetween, is thicker than its both ends.

31. A vacuum airtight container having an insulating container made of a ceramic member and a seal cover made of a metal member to seal openings of said insulating container, wherein said insulating container and said seal cover are sealed with a ceramic-metal bonding material which comprises an Ag layer to be placed on the side of said metal member, a Ti-containing layer containing a Ti-Ag compound to be placed on the side of said ceramic member, and a Cu layer which is placed between said Ag layer and said Ti-Ag layer and contains a solid phase state of said metal member component to prevent the constituent elements of said metal member layer from diffusing.

32. A method of manufacturing a ceramic-metal bonded product which comprises placing between a ceramic member and a metal member a ceramic-metal bonding material which has a laminate having an Ag layer, a Cu layer, and an Ag layer overlaid in this order and a Ti-containing layer containing at least a Ti-Ag compound formed on at least one surface of said laminate so as to contact said Ti-containing layer to said ceramic member, and heating them at a temperature of the melting temperature or above of said bonding material to bond said ceramic member and said metal member.

33. A method of manufacturing a ceramic-metal bonded product which comprises placing between a ceramic member and a metal member a bonding material which has a laminate having an Ag layer, a Cu layer, an Ag layer, and a Ti layer overlaid in this order so as to contact said Ti-containing layer to said ceramic member, once keeping them at a temperature of 673 K or above but less than the melting temperature of said bonding material, and heating up to the melting temperature or above of said bonding material for the heat treatment to bond said ceramic member and said metal member.
